# EUROPEAN PATENT SPECIFICATION

(11) **EP 1 788 891 B1**
(45) Date of publication and mention of the grant of the patent: **27.01.2010**
(21) Application number: 05793037.2
(22) Date of filing: 27.09.2005
(51) Int. Cl.: A23L 1/0522, A23L 1/0524, A21D 2/00

(54) **WATER RETAINING COMPOSITION BASED ON STARCH AND PECTIN FOR FOODSTUFF AND USE THEREOF**
WASSERHALTENDE ZUSAMMENSETZUNG AUF STÄRKE- UND PEKTINBASIS FÜR NAHRUNGSMITTEL UND VERWENDUNG DIESER ZUSAMMENSETZUNG
COMPOSITION DE RETENTION D'EAU A BASE D'AMIDON ET DE PECTINE DESTINEE A DES ALIMENTS ET SON UTILISATION

(30) Priority: 21.01.2005 IT MI20050076
(43) Date of publication of application: 30.05.2007
(73) Proprietor: Pregel S.p.A., 42100 Gavasseto (Reggio Emilia) (IT)
(72) Inventor: RABBONI, Luciano, 42019 Scandiano, (Reggio Emilia) (IT)
(74) Representative: Biggi, Cristina
(86) International application number: PCT/IB2005/003195
(87) International publication number: WO 2006/077459

(56) References cited:
- EP-A- 0 512 274
- EP-A- 0 685 171
- WO-A-97/25869
- DATABASE FSTA [Online] INTERNATIONAL FOOD INFORMATION SERVICE (IFIS), FRANkFURT-MAIN, DE; 1985, LABELL F: "Low-moisture fruit fillings offer stability and microbiological soundness to bakery products." XP002388154 Database accession no. 85-1-06-m0025
- ROBERT J WINWOOD ET AL: "Application of sodium alginate and low methoxy pectin and a bakestable fruit filling" RESEARCH DISCLOSURE, MASON PUBLICATIONS, HAMPSHIRE, GB, vol. 352, no. 38, August 1993 (1993-08), XP007119245 ISSN: 0374-4353

## Description

The present invention relates to a water-absorbing composition having thickening and/or gelling properties, for preventing water from getting out from food products before, while and after baking.

Said composition has proved particularly useful in the field of catering for preparing baked products, both sweet and salty products, coated or stuffed with fruit, vegetables, cheese and/or other foods that tend to release water.

One of the main problems related with the preparation of baked products consists in the release of water (often a considerable amount thereof) from a number of water-rich foods, which are used as main ingredients for said products.

As a matter of fact, sweet and/or salt pies often combine their pastry (short, brisé or puff pastry) and other current components also with fresh or stewed fruit, whole or diced fruit, stewed or raw vegetables, fresh or mature cheese, as well as other food products with a high water content.

By mere way of non-limiting example, the following baked products can be mentioned: tarts coated with fresh fruit (such as strawberries, cherries, bananas, kiwis, pineapples, oranges); apple or pear pies; fruit-stuffed strudels; salt pies coated or stuffed with stewed or raw vegetables (such as chards, spinach, courgettes, aubergines, artichokes); cheese quiches or mousses; pizzas and turnovers coated/stuffed, among other things, with several types of cheese, soft or stringy to various degrees.

Said water-rich foods (for simplicity's sake hereinafter referred to as "watery foods") can release water before baking (often baked products are frozen before being baked and as such are preserved and/or sold); while baking (through evaporation, often violent evaporation, by boiling water inside the oven); after baking, during the cooling step.

Water release can further occur also when the baked product is frozen after being baked (precooked frozen food) and then thawed out when used.

Said water release causes a long series of disadvantages, both from an aesthetical and from an organoleptic point of view, which make the final product poor if not unacceptable for the consumer.

For instance, fresh fruit loses its initial texture and brilliance, oxidizes, becomes mushy and tends to get a dampish and rotting appearance.

Fruit and vegetable stuffings release an excess of moisture that wets the pastry and often prevents its correct baking (the pastry does not rise uniformly, the inside is raw and wet, the outside tends to dry or burn).

Cheese (in particular mousses and soft cheese) tends to degrade/de-emulsify and releases a large amount of water (pizzas and turnovers, as well as puff pastry, do not rise and are gummy).

Depending on the type, on the degree of preservation and on the operating conditions they undergo, said watery foods can release, in a shorter or in a longer time, even up to 80% of water, referred to the initial weight of the whole product.

As a consequence, said baked products, after being baked, are not homogeneously and uniformly compact, crumbly and thin as it would be desirable.

Conversely, said products take on an inhomogeneous and partially sticky appearance, which does not allow them to be sliced neatly (they often have a sort of "chewing-gum" effect).

Moreover, water violently released during baking (oven temperature is on average far higher than water boiling temperature) stains not only the oven but above all the' pastry, thus making the outer appearance of the finished product even worse.

It is then obvious that products with such features cannot even be frozen after being prepared, which has negative effects for instance on the field of ready-to-eat, precooked and frozen foods.

Attempts have been made to obviate these advantages.

For instance, fresh fruit laid on puff pastries and tarts is coated with an insulating layer, also quite a thick layer, of gelatin (preferably fish gelatin), so as to prevent fruit from coming into contact with oven boiling air.

However, gelatin does not have the same homogeneous effect on all types of fruit; moreover, it can interfere both with the taste of the pie and with its outer appearance (depending on its purity and transparence). In the field of salty foods, vegetable and/or cheese stuffings are generally made thicker by adding binding agents such as for instance eggs, cream, béchamel, grated hard cheese (for instance Parmesan cheese), potato starch.

However, also in this case the pastry cannot be completely prevented from getting wet due to an unavoidable water release caused by the stuffing.

Moreover, added foods (for instance cream and/or eggs) are not always appreciated or tolerated by all consumers, in particular by those people who are on a low-calorie diet or who are allergic or intolerant to said foods.

It is therefore necessary to prevent watery foods used in the preparation of any baked products from releasing water, even a large amount thereof, during all the steps involved in the preparation and/or preservation of said products (before, during and/or after baking). The present invention, therefore, aims at preventing said dangerous water release from said watery foods as previously described, maintaining at the same time on an optimal level their outer appearance, their organoleptic properties (appearance; brilliance; neat appearance during cutting; homogeneous baking, texture and crumbliness; low residual moisture; good palatability, without aftertastes or taste alterations), as well as the preservability of said baked products.

This aim and others, which will be evident from the following detailed description, have been achieved by the Applicant, who has unexpectedly found that a composition comprising a suitable mixture of water-absorbing substance having thickening and/or gelling properties can give a satisfactory answer to the technical problem described above, thus overcoming the disadvantages of the state of the art.

An object of the present invention is therefore a water-absorbing composition for preventing water release from watery food products, as disclosed in the appended independent claim.

Another object of the present invention is a method for preventing said water release from said products, as disclosed in the appended independent claim.

Still another aim of the present invention is the use of said composition for preventing water release from watery food products before, during and after their baking process, as disclosed in the appended independent claim.

A further aim of the present invention is the use of said composition for the preparation and/or preservation of baked products comprising watery foods.

Another object of the present invention is further a baked product comprising said composition.

Fruit fillings based on modified starches and pectin, which are used as stable fillings for bakery products, are known form LaBell, F., Food Processing (USA), vol. 43, p.36, (1982).

Preferred embodiments of the present invention are disclosed in the appended dependent claims.

The composition according to the present invention comprises one or preferably more water-absorbing substances, of natural origin or not, having thickening and/or gelling properties.

Said water-absorbing substances should be able to operate synergetically so as to obtain final products that are stable within a wide range of temperatures, from those used for freezing foods (about -25°C to - 18°C) to those reached in the oven (up to about 250°C and 300°C).

Said final products should be also be stable with low pH values (this feature is particularly important, for instance when citrus tarts have to be prepared, whose pH value is much lower than other types of fruit, such as bananas).

Moreover, said final products are on average in the form of a perfectly transparent gel, which does not interfere with the natural taste of the foods to be protected).

The composition according to the present invention has proved versatile and able to give homogeneous results that can be reproduced also under quite different conditions of use (due both to the different types and features of watery food products, in particular of those used in baked products, as well as of baked products themselves, and to the different technical conditions of preparation which said product are subject to).

In order to obtain the above result, the Applicant has deeply studied, selected and sorted the most suitable water-absorbing substances, mixtures and mutual weight ratios thereof.

Preferred excipients and additives have been studied, selected and sorted in the same way.

Water-absorbing substances having thickening and gelling properties, as they are advantageously used so as to achieve the aim of the present invention, are selected among polymers, preferably of vegetable origin, such as for instance agar; carrageenins; xanthanes; modified celluloses; carob meals; starches; pectins; alginates.

The composition according to the present invention comprises a mixture of said water-absorbing substances, chosen among starches and pectins, as further defined in the claims.

Said composition comprises a mixture of two starches and of one pectin.

Said starch is a polysaccharide made up on average of 25% of amylose and 75% of amylopectin.

To the purposes of the present invention, said starch is chosen among modified starches; more preferably among acetylated starches, modified, acetylated, phosphorylated potato starches and mixtures thereof.

Pectin is a macromolecular compound belonging to the group of etheropolysaccharides, mainly obtained from apples, citrus fruits, beets.

Its main component is polygalacturonic acid partially esterified with methanol. When the degree of esterification is above 50%, pectin is referred to as "high-methoxy" pectin; when the degree of esterification is below 50%, pectin is referred to as "low-methoxy" pectin.

To the purposes of the present invention, pectin is a low-methoxy amidated pectin (for simplicity's sake hereinafter referred to as "amido-pectin"), preferably obtained from citrus fruits, characterized by a degree of esterification of 27% to 37%; by a degree of amidation of 15% to 22%; by an average reactivity to calcium and by a pH value of 4.2 +/- 0.7 in a 2.5% in distilled water at 20°C.

The composition according to the present invention comprises a mixture of two modified starches and of one pectin.

In a particularly preferred embodiment, the composition according to the present invention comprises a mixture of two modified starches and of one pectin, as defined in the claims.

In this case, said composition has proved - wholly unexpectedly - to be able to operate synergetically between the three components, thus enabling to obtain better results than those obtained using the components individually or two by two or in other types of mixtures.

Said two modified starches are:
- an acetylated starch operating at a temperature of about -15°C to 40°C (for simplicity's sake hereinafter referred to as "cold starch"), hydrating and giving rise to a stable gel; said gel being characterized by an excellent resistance to freezing and to high temperatures;
- a high-viscosity modified potato starch operating at a temperature of about 80°C to 250°C (for simplicity's sake hereinafter referred to as "hot starch"), hydrating and giving rise to a stable gel; said gel being characterized by an excellent resistance to freezing, to high temperatures and to very low pH values (about 2,8-3,2).

The composition according to the present invention can further comprise also one or more excipients and additives commonly used in food preparation techniques, such as for instance: antioxidants, preserving agents, acidulants, sweeteners, stabilizing agents.

Said excipients/additives are preferably chosen among: ascorbic acid and derivatives thereof, benzoic acid and derivatives thereof, p-hydroxybenzoates, tocopherols, sorbic acid and derivatives thereof, such as potassium sorbate, propionic acid and derivatives thereof, sulfur dioxide and derivatives thereof, citric acid, tartaric acid, acetic acid, malic acid, lactic acid, sugar, low-calorie synthetic sweeteners, maltodextrins, dehydrated glucose.

More preferably, said excipients are chosen among: ascorbic acid, dehydrated glucose, sugar, potassium sorbate, citric acid.

In the composition according to the present invention:
- the starch or starch mixture is present on the whole in an amount of 10% to 94% by weight referred to the total weight of the composition; preferably of 30% to 90%; more preferably of 40% to 80%;
- pectin is present on the whole in an amount of 0.05% to 6% by weight referred to the total weight of the composition; preferably of 0.1% to 3%; more preferably of 0.15% a 2.5%;
- additives and excipients are present in the necessary amount to reach 100% of the composition.

In a particularly preferred embodiment, the composition according to the present invention comprises the following components:
- a cold starch as defined above, in an amount of 15% to 45% by weight referred to the total weight of the composition; preferably of 20% to 40%; more preferably of 25% to 35%;
- a hot starch as defined above, in an amount of 15% to 45% by weight referred to the total weight of the composition; preferably of 20% to 40%; more preferably of 25% to 35%;
- an amido-pectin as defined above, in an amount of 0.07% to 6% by weight referred to the total weight of the composition; preferably of 0.1% to 3%; more preferably of 0.15% to 2.5%;
- sugar in an amount of 5% to 35% by weight referred to the total weight of the composition; preferably of 10% to 30%;
- dehydrated glucose in an amount of 5% to 35% by weight referred to the total weight of the composition; preferably of 10% to 30%;
- ascorbic acid in an amount of 0.5% to 8% by weight referred to the total weight of the composition; preferably of 1% to 5%;
- potassium sorbate in an amount of 0.5% to 7% by weight referred to the total weight of the composition; preferably of 1% to 5%;
- citric acid in an amount of 0.5% to 12% by weight referred to the total weight of the composition; preferably of 1% to 10%;
in which the total amount of additives and excipients is anyhow the one necessary to reach 100% of the composition.

A particularly preferred though not limiting example of a cold starch that can be advantageously used is a modified potato starch (acetylated distarch phosphate), pre-gelled, stabilized and cross-linked, as is known in the field with the international name E1414 (CN code 3505 10 50).

A particularly preferred though not limiting example of a hot starch that can be advantageously used is a high-viscosity modified potato starch (viscosity: minimum peak 1400 BU - conc. 3.2 % DS, according to Lyckeby Stärkelsen), known in the field with the international name E1442.

A particularly preferred though not limiting example of an amido-pectin that can be advantageously used is a low-methoxy amidated *Citrus Pectin* (characterized by: degree of esterification 20%-35%; degree of amidation 16%-21%; average reactivity to calcium; pH = 4.2 +/- 0.5 in a 2.5% solution in distilled water at 20°C), known in the field with the international name E440).

The composition according to the present invention is conventionally prepared by mixing the desired ingredients under stirring in a suitable mixing device (for instance a rotary cube).

The sequence of addition of said ingredients into the mixing device is absolutely not limiting.

The operating temperature is on average near room temperature (about 10°C to 40°C).

Under particular environmental conditions, it is useful to operate in a controlled moisture environment, so as to avoid that an excess of atmospheric humidity can start a partial gelation, in particular of the cold starch.

The composition according to the present invention is in the form of an almost white, granular powder, little hygroscopic if preserved under normal environmental conditions (atmospheric pressure, average humidity, temperature of 15°C to 35°C).

In case of excessive humidity, it is advisable to preserve said powder in a sealed package or in a controlled environment.

As far as amounts of use of said composition are concerned, the latter vary within a quite wide range depending on the type of watery food product (and of the corresponding baked product containing it) to be protected.

Preferred amounts are 40 g to 100 g of composition pro kg of food product to be protected (fruit, vegetables, cheese); more preferably 60 g to 80 g.

In a preferred embodiment, in particular when fresh fruit has to be protected (for instance in a fruit tart), the composition according to the present invention is further diluted with a suitable amount of sugar before being mixed with/laid onto the product.

Preferably, 60-80 g of said composition are mixed with about 150-250 g of sugar; the resulting mixture is then mixed in its turn with 1 kg of fruit; eventually, the fruit thus treated is laid onto the baking-pan coated with short pastry or with puff pastry and the baked product is frozen before being used or it is baked directly.

The amounts of composition according to the present invention and of additional sugar are suitably varied by the confectioner depending on the more or less acid taste of the fruit used and of its higher or lower moisture (for instance, citrus fruits and kiwis are more acid and "wetter"; therefore, they require higher amounts than bananas or rennet apples for instance).

The composition according to the present invention has proved to be able to efficiently absorb and retain water released by watery foods before, during and after baking.

Tests made on different types of watery foods (not fully ripe, quite ripe, stewed fresh fruit, soft fresh cheese) have shown that said compositions in the amounts referred to above can absorb up to about 80% by weight of water, referred to the initial weight of the food.

For instance, pies have been prepared, added with one of the preferred compositions according to the invention (TC Composition as described in the following test section), in the same amount as the one normally used for preparing said pies with fruit, mixed with amounts of water depending on the weight of the fruit to be used.

The amounts of water have been calculated increasingly, i.e.: 50 - 60 - 70 - 80 - 90% referred to the total weight of the fruit to be used.

After a normal baking process the composition according to the invention has absorbed without problems (i.e. the pastry has not wetted) water up to 75-80% by weight, referred to the amount of fruit normally used. Higher percentages of water tend to wet the pastry and to alter its baking properties.

Anyhow, the absorption percentage varies depending on the type of food, on its state of preservation, on the amount of water-absorbing composition, of the contact time between the food and the composition.

For instance, if mixed with less "moist" foods (bananas, hardly ripe strawberries), the composition according to the invention absorbs approximately up to 40%-60% by weight of water, referred to the initial weight of said foods, preserving them optimally for several days.

If mixed with "moister" foods (stewed pears, boiled spinach, cheese mousses), the composition according to the invention absorbs approximately up to 60%-80% by weight of water, referred to the initial weight of said foods, preserving them adequately for some days.

In order to verify the advantages of the composition according to the present invention with respect to the state of the art, the Applicant has made a series of comparative tests in which three skilled confectioners compared fruit pies (prepared conventionally) in which fruit had been pre-treated or not with one of the preferred compositions according to the invention.

The composition used in said tests is the following:
- cold starch E1414, as defined above: 33% by weight referred to the total weight of the composition;
- hot starch E1442, as defined above: 33% by weight referred to the total weight of the composition;
- amidated *Citrus Pectin* E440, as defined above: 0.4% by weight referred to the total weight of the composition;
- sugar: 12% by weight referred to the total weight of the composition;
- dehydrated glucose: 12% by weight referred to the total weight of the composition;
- ascorbic acid: 4% by weight referred to the total weight of the composition;
- potassium sorbate: 4% by weight referred to the total weight of the composition;
- citric acid: 1,6% by weight referred to the total weight of the composition.

For simplicity's sake, said composition is hereinafter referred to as "TC Composition" *(Test Composition).*

### Comparative test 1

The following tarts made of short pastry coated with segments of orange have been prepared.
A : segments have not been treated in any way
B : segments have been coated with a (fish) gelatin layer
C : segments have been previously mixed with the following mixture: 80 g of TC Composition plus 250 g of sugar pro kg of fruit
D : segments have been previously mixed with the mixture of tart C, in which the TC composition has been prepared without cold starch (though maintaining the same mutual weight ratios between the other components)
E : segments have been previously mixed with the mixture of tart C, in which the TC composition. has been prepared without hot starch (though maintaining the same mutual weight ratios between the other components)
F : segments have been previously mixed with the mixture of tart C, in which the TC composition has been prepared without amido-pectin (though maintaining the same mutual weight ratios between the other components)

The following qualitative parameters have been taken into consideration for the comparison:
- i) appearance immediately after baking (shape, color, transparence, texture of fruit);
- ii) baking, texture and homogeneity of pastry;
- iii) cutting behavior (neat cut or not);
- iv) absence of residual moisture (on fruit and on pastry under fruit);
- v) palatability (natural taste, absence of aftertastes or taste alterations);
- vi) preservability (after 6 days at 5-8°C).

The results obtained are listed in the following Table 1, in which the scoring has been expressed as the average value of the scores given by the group of skilled people (scores vary from: 0 = unacceptable; 1 = poor; 2 = acceptable; 3 = fairly good; 4 = good; 5 = excellent).

**TABLE 1 - Orange tarts**

| **Qualitative parameters** | **Tarts** | | | | | |
|---|---|---|---|---|---|---|
| | **A** | **B** | **C** | **D** | **E** | **F** |
| **i** | 0 | 2 | 4 | 4 | 2 | 3 |
| **ii** | 1 | 2 | 4 | 4 | 3 | 2 |
| **iii** | 1 | 1/2 | 5 | 4 | 4 | 3 |
| **iv** | 0 | 1 | 4 | 3 | 2 | 2 |
| **v** | 0 | 1 | 4 | 3 | 2 | 2 |
| **vi** | 0 | 1 | 4 | 3 | 3 | 3 |

### Comparative test 2

Following the same procedure as in the previous test, the same short pastry tarts A - F coated with slices of rennet apple have been prepared.

In this test the mixture used for pre-treating the fruit was made up of 70 g of TC Composition plus 230 g of sugar pro kg of fruit.

The results obtained are listed in the following Table 2.

**TABLE 2 - Apple tarts**

| **Qualitative parameters** | **Tarts** | | | | | |
|---|---|---|---|---|---|---|
| | **A** | **B** | **C** | **D** | **E** | **F** |
| **i** | 1 | 2 | 5 | 4 | 2 | 3 |
| **ii** | 2 | 2 | 4 | 4 | 3 | 3 |
| **iii** | 2 | 2 | 4 | 4 | 3 | 3 |
| **iv** | 1 | 1 | 4 | 3 | 2 | 2 |
| **v** | 1 | 1 | 4 | 3 | 3 | 3 |
| **vi** | 1 | 1 | 5 | 3 | 3 | 2 |

### Comparative test 3

Following the same procedure as in the previous test, similar tarts A - F, here made of puff pastry, coated with hardly ripe fresh strawberries have been prepared.

In this test the mixture used for pre-treating the fruit was made up of 60 g of TC Composition plus 200 g of sugar pro kg of fruit.

The results obtained are listed in the following Table 3.

**TABLE 3 - Strawberry puff pastry**

| **Qualitative parameters** | **Puff pastry pies** | | | | | |
|---|---|---|---|---|---|---|
| | **A** | **B** | **C** | **D** | **E** | **F** |
| **i** | 0 | 2 | 5 | 4 | 1 | 3 |
| **ii** | 0 | 1 | 4 | 3 | 2 | 3 |
| **iii** | 0 | 1 | 4 | 3 | 1 | 3 |
| **iv** | 0 | 0 | 4 | 2 | 3 | 3 |
| **v** | 1 | 2 | 5 | 3 | 3 | 3 |
| **vi** | 0 | 0 | 5 | 3 | 2 | 3 |

From the three tests above it can be clearly inferred that the water-absorbing composition according to the present invention offers a large number of advantages with respect to the state of the art.

In particular, despite the baking process fruit maintains the turgidity and color of fresh fruit. Moreover, a sort of almost creamy filling substance, with a texture resembling jam, is created between the single fruit pieces.

Conversely, in the comparative tart (tart A) in which fruit has been used as such, without any treatment,. said fruit becomes darker after the baking process; its structure and texture become similar to dried fruit and the single pieces are separate one from the other, giving the coating an optical effect of emptiness, though the weight of fruit used is the same.

As far as fruit is concerned, it is therefore possible to prepare pies and/or tarts with all types of fresh fruit.

As a matter of fact, the composition according to the present invention absorbs water released by fruit, thus enabling to obtain good, if not excellent, coatings also using fruit qualities, such as citrus fruits, that could create problems because of their water content.

The amount of said composition can further be easily increased/modulated by the user in order to compensate the higher or lower moisture inside the product.

During the baking of the pie or tart, the composition according to the present invention has several functions: for instance, it builds around fruit a sort of gel preventing fruit from boiling and consequently from dirtying pastry.

Moreover, said composition blocks fruit water, thus enabling pastry to bake more uniformly and to maintain its crispness.

Furthermore, said composition enables to obtain pies and tarts which, after baking, can be cut into perfect slices; as a matter of fact, it avoids that water normally present in fruit wets underlying pastry, which as a consequence is crumblier and crisper.

In particular, excellent apple or pear strudels can also be prepared, in which stuffing is compact and outer puff pastry crisp and perfectly baked.

Pies obtained with the use of the composition according to the invention remain fresh and fragrant for several days, and also their appearance does not change for several days.

Moreover, said pies resist to freezing, both before and after baking.

The composition according to the present invention is therefore greatly useful for confectioners, who can easily prepare any kind of fruit pie, also coated pies (such as American apple pies) and be sure to always obtain perfect results.

The composition according to the present invention can also be used for preparing other baked products, such as for instance salt pies with vegetables and quiches. The use of said composition mixed with the vegetable mixture enables to obtain compact stuffings and pies with a well baked and crumbly pastry, said pies being portionable into neat slices.

Therefore, the composition according to the present invention is advantageously used for preventing water release from particularly moisture-rich foods, such as for instance fresh or stewed fruit, whole or diced fruit, jams, stewed or raw vegetables, fresh or mature cheese, cheese mousses or creams, yogurts, before, during and after baking.

In a preferred embodiment, said composition is advantageously used for preventing water release from particularly moisture-rich foods used as important ingredients in the preparation of baked products.

In a particularly preferred embodiment, said composition is advantageously used for the preparation of baked products of any type (both sweet and salty products), which do not release water during preparation, baking, pre- and/or post-baking preservation.

## Claims

1. A water-absorbing composition for preventing water release from food products before, during and after baking, comprising a mixture of two starches and pectin :
- **characterized in that** said mixture is made up of two modified starches and one pectin, said two modified starches and said pectin are:
- a cold starch, said starch being an acetylated starch operating at a temperature of about -15°C to 40°C, hydrating and giving rise to a stable gel, said gel being resistant to freezing and to high temperatures;
- a hot starch, said starch being a high-viscosity modified potato starch operating at a temperature of about 80°C to 250°C, hydrating and giving rise to a stable gel, said gel being resistant to freezing, to high temperatures and to very low pH values (about 2.8 - 3.2);
- an amido-pectin, said pectin being a low-methoxy amidated pectin **characterized by** a degree of esterification of 27% to 37%, by a degree of amidation of 15% to 22%, by an average reactivity to calcium and by a pH value of 4.2 +/- 0.7 in a 2.5% solution in distilled water at 20°C.

2. The composition according to any of the preceding claims, further comprising one or more excipients and additives, such as: antioxidants, preserving agents, acidulants, sweeteners, stabilizing agents; said additives are preferably chosen among ascorbic acid and derivatives thereof, benzoic acid and derivatives thereof, p-hydroxybenzoates, tocopherols, sorbic acid and derivatives thereof, such as potassium sorbate, propionic acid and derivatives thereof, sulfur dioxide and derivatives thereof, citric acid, tartaric acid, acetic acid, malic acid, lactic acid, sugar, low-calorie synthetic sweeteners, maltodextrins, dehydrated glucose.

3. The composition according to claim 2, in which said excipients are chosen among: ascorbic acid, dehydrated glucose, sugar, potassium sorbate, citric acid.

4. The composition according to any of the preceding claims, in which:
- said starch mixture is present on the whole in an amount of 10% to 94% by weight referred to the total weight of the composition; preferably of 30% to 90%; more preferably of 40% to 80%;
- pectin is present on the whole in an amount of 0.05% to 6% by weight referred to the total weight of the composition; preferably from 0.1% to 3%; more preferably from 0.15% to 2.5%;
- additives and excipients are present in the necessary amount to reach 100% of the composition.

5. The composition according to any of the preceding claims, comprising:
- the cold starch as in claim 1, in an amount of 15% to 45% by weight referred to the total weight of the composition; preferably of 20% to 40%; more preferably of 25% to 35%;
- the hot starch as in claim 1, in an amount of 15% to 45% by weight referred to the total weight of the composition; preferably of 20% to 40%; more preferably of 25% to 35%;
- the amido-pectin as in claim 1, in an amount of 0.07% to 6% by weight referred to the total weight of the composition, preferably of 0.1% to 3%; more preferably of 0.15% to 2.5%;
- sugar in an amount of 5% to 35% by weight referred to the total weight of the composition; preferably of 10% to 30%;
- dehydrated glucose in an amount of 5% to 35% by weight referred to the total weight of the composition; preferably of 10% to 30%; - ascorbic acid in an amount of 0.5% to 8% by weight referred to the total weight of the composition; preferably of 1% to 5%;
- potassium sorbate in an amount of 0.5% to 7% by weight referred to the total weight of the composition; preferably of 1% to 5%;
- citric acid in an amount of 0.5% to 12% by weight referred to the total weight of the composition; preferably of 1% to 10%; in which the total amount of additives and excipients is the one necessary to reach 100% of the composition.

6. A method for preventing water release from water-rich food products before, during and after baking, comprising the pretreatment of said products with an amount of a composition according to any of the claims 1 to 5.

7. Use of a composition according to any of the claims 1 to 5, for preventing water release from water-rich food products before, during and after baking.

8. Use according to claim 7 for preventing water release from baked products, sweet and/or salty, containing said food products.

9. Use according to claim 8, in the preparation and/or preservation of said baked products before and/or after their baking.

10. Use according to any of the claims 7-9, in which, if said water-rich food products are made up of fruit, said composition according to one of the claims 1 to 5 is diluted with an amount of sugar before being added to said fruit.

11. Baked products comprising an amount of one of the compositions according to any of the claims 1 to 5.

## Patentansprüche

1. Wasserabsorbierende Zusammensetzung zur Verhinderung der Wasserfreisetzung aus Nahrungsmitteln vor, während und nach dem/s Backen/s, umfassend eine Mischung aus zwei Stärken und Pektin:
- **dadurch gekennzeichnet, daß** die benannte Mischung aus zwei modifizierten Stärken und einem Pektin besteht, wobei die benannten zwei modifizierten Stärken und das benannte Pektin sind:
- eine kalte Stärke, wobei die benannte Stärke eine acetylierte Stärke ist, die bei einer Temperatur von ca. -15°C bis 40°C wirkt, indem sie hydratisiert wird und zu einem stabilen Gel führt, wobei das benannte Gel einfrier- und hochtemperaturbeständig ist;
- eine heiße Stärke, wobei die benannte Stärke eine hochviskose modifizierte Kartoffelstärke ist, die bei einer Temperatur von ca. 80°C bis 250°C wirkt, indem sie hydratisiert wird und zu einem stabilen Gel führt, wobei das benannte Gel einfrier und hochtemperaturbeständig und beständig zu sehr niedrigen pH-Werten (ca. 2,8-3,2) ist;
- ein Amid-Pektin, wobei das benannte Pektin ein nieder-methoxyliertes amidiertes Pektin ist, **gekennzeichnet durch** einen Veresterungsgrad von 27% bis 37%, **durch** einen Amidierungsgrad von 15% bis 22%, **durch** eine durchschnittliche Reaktivität zu Kalzium und **durch** einen pH-Wert von 4,2 +/- 0,7 in einer 2,5%-ige Lösung in verdünntem Wasser bei 20°C.

2. Zusammensetzung nach irgendeinem der vorherigen Ansprüche, weiter umfassend einen oder mehrere Hilfsstoffe und Zusatzstoffe wie: Antioxydationsmittel, Konservierungsmittel, Säuerungsmittel, Süßmittel, Stabilisierungsmittel; die benannten Zusatzstoffen sind bevorzugt ausgewählt von der Gruppe umfassend Ascorbinsäure und deren Derivate, Benzoesäure und deren Derivate, p-Hydroxybenzoate, Tocopherole, Sorbinsäure und deren Derivate, wie Kaliumsorbat, Propionsäure und deren Derivate, Schwefeldioxid und dessen Derivate, Zitronensäure, Weinsäure, Essigsäure, Apfelsäure, Milchsäure, Zucker, kalorienarme synthetische Süßmittel, Maltodextrine, getrocknete Glukose.

3. Zusammensetzung nach Anspruch 2, worin die benannten Hilfsstoffe ausgewählt sind von der Gruppe umfassend: Ascorbinsäure, getrocknete Glukose, Zucker, Kaliumsorbat, Zitronensäure.

4. Zusammensetzung nach irgendeinem der vorherigen Ansprüche, worin:
- die benannten Stärkenmischung insgesamt in einer Menge von 10 bis 95 Gew.-% in Bezug auf das Gesamtgewicht der Zusammensetzung vorliegt; bevorzugt von 30 bis 90 Gew.-%; bevorzugter von 40 bis 80 Gew.-%;
- das Pektin insgesamt in einer Menge von 0,05 bis 6 Gew.-% in Bezug auf das Gesamtgewicht der Zusammensetzung vorliegt; bevorzugt von 0,1 bis 3 Gew.-%; bevorzugter von 0,15 bis 2,5 Gew.-%;
- Zusatzstoffe und Hilfsstoffe in der erforderlichen Menge zu 100% der Zusammensetzung vorliegen.

5. Zusammensetzung nach irgendeinem der vorherigen Ansprüche, umfassend:
- die kalte Stärke nach Anspruch 1 in einer Menge von 15 bis 45 Gew.-% in Bezug auf das Gesamtgewicht der Zusammensetzung; bevorzugt von 20 bis 40 Gew.-%; bevorzugter von 25 bis 35 Gew.-%;
- die heiße Stärke nach Anspruch 1 in einer Menge von 15 bis 45 Gew.-% in Bezug auf das Gesamtgewicht der Zusammensetzung; bevorzugt von 20 bis 40 Gew,-%; bevorzugter von 25 bis 35 Gew.-%;
- das Amid-Pektin nach Anspruch 1 in einer Menge von 0,07 bis 6 Gew.-% in Bezug auf das Gesamtgewicht der Zusammensetzung; bevorzugt von 0,1 bis 3 Gew.-%; bevorzugter von 0,15 bis 2,5 Gew.-%;
- Zucker in einer Menge von 5 bis 35 Gew.-% in Bezug auf das Gesamtgewicht der Zusammensetzung; bevorzugt von 10 bis 30 Gew.-%;
- dehydratisierte Glukose in einer Menge von 5 bis 35 Gew.-% in Bezug auf das Gesamtgewicht der Zusammensetzung; bevorzugt von 10 bis 30 Gew.-%;
- Ascorbinsäure in einer Menge von 0,5 bis 8 Gew.-% in Bezug auf das Gesamtgewicht der Zusammensetzung; bevorzugt von 1 bis 5 Gew.-%;
- Kaliumsorbat in einer Menge von 0,5 bis 7 Gew.-% in Bezug auf das Gesamtgewicht der Zusammensetzung; bevorzugt von 1 bis 5 Gew.-%;
- Zitronensäure in einer Menge von 0,5 bis 12 Gew.-% in Bezug auf das Gesamtgewicht der Zusammensetzung; bevorzugt von 1 bis 10 Gel.-%;
worin die Gesamtmenge der Zusatzstoffe und Hilfsstoffe die erforderliche Menge zu 100% der Zusammensetzung ist.

6. Verfahren zur Verhinderung der Wasserfreisetzung aus wasserreichen Nahrungsmitteln vor, während und nach dem/des Backen/s, umfassend die Vorbehandlung der benannten Nahrungsmittel mit einer Menge einer Zusammensetzung nach irgendeinem der Ansprüche 1 bis 5.

7. Verwendung einer Zusammensetzung nach irgendeinem der Ansprüche 1 bis 5 zur Verhinderung der Wasserfreisetzung aus wasserreichen Nahrungsmitteln vor, während und nach dem/des Backen/s.

8. Verwendung nach Anspruch 7 zur Verhinderung der Wasserfreisetzung aus süßen und/oder salzigen Backwaren enthaltend die benannten Nahrungsmittel.

9. Verwendung nach Anspruch 8 in der Vorbereitung und/oder Konservierung der benannten Backwaren vor und/oder nach deren Backen.

10. Verwendung nach irgendeinem der Ansprüche 7-9,
worin, wenn die benannten wasserreichen Nahrungsmittel aus Obst bestehen, die benannte Zusammensetzung nach einem der Ansprüche 1 bis 5 mit einer Menge von Zucker verdünnt wird, bevor sie dem benannten Obst zugesetzt wird.

11. Backwaren umfassend eine Menge von einer der Zusammensetzungen nach irgendeinem der Ansprüche 1 bis 5.

## Revendications

1. Composition de rétention d'eau pour éviter la libération d'eau d'aliments avant, pendant et après cuisson, comprenant un mélange de deux amidons et pectine:
**caractérisée en ce que** ledit mélange comprend deux amidons modifiés et une pectine, lesdits deux amidons modifiés et ladite pectine étant:
- un amidon froid, ledit amidon étant un amidon acétylé, actif une température d'environ -15°C à 40°C, se hydratant et formant un gel stable, ledit gel étant résistant à la congélation et aux hautes températures;
- un amidon chaud, ledit amidon étant un amidon de pomme de terre modifiée à haute viscosité, active à une température d'environ 80°C à 250°C, se hydratant et formant un gel stable, ledit gel étant résistant à la congélation, aux hautes températures et à des valeurs de pH très basses (environ 2,8-3,2);
- une amidopectine, ladite pectine étant une pectine amidée à basse teneur de méthoxyle, **caractérisée par** un degré d'estérification de 27% à 37%, un degré d'amidation de 15% à 22%, une réactivité moyenne au calcium, et une valeur de pH de 4,2 +/- 0,7 dans une solution à 2,5% en eau distillée à 20°C.

2. Composition selon une quelconque des revendications précédentes, comprenant en outre un ou plusieurs excipients et additifs, tels que: antioxydants, agents de conservation, acidifiants, édulcorants, agents stabilisateurs; lesdits additifs sont choisis de préférence parmi acide ascorbique et ses dérivés, acide benzoïque et ses dérivés, p-hydroxybenzoates, tocophérols, acide sorbique et ses dérivés, tels que sorbate de potassium, acide propionique et ses dérivés, dioxyde de soufre et ses dérivés, acide citrique, acide tartrique, acide acétique, acide malique, acide lactique, sucre, édulcorants synthétiques à faible teneur en calories, maltodextrines, glucose déshydraté.

3. Composition selon la revendication 2, où lesdits excipients sont choisis parmi: acide ascorbique, glucose déshydraté, sucre, sorbate de potassium, acide citrique.

4. Composition selon une quelconque des revendications précédentes, où:
- ledit mélange d'amidons est présent en total dans une quantité de 10% à 94% en poids sur le poids total de la composition; de préférence de 30% à 90%; plus préférablement de 40% à 80%;
- la pectine est présente en total dans une quantité de 0,05% à 6% en poids sur le poids total de la composition; de préférence de 0,1% à 3%; plus préférablement de 0,15% à 2,5%;
- les additifs et excipients sont présents dans la quantité nécessaire à atteindre 100% de la composition.

5. Composition selon une quelconque des revendications précédéntes, comprenant:
- l'amidon froid selon la revendication 1 dans une quantité de 15% à 45% en poids sur le poids total de la composition; de préférence de 20% à 40%; plus préférablement de 25% à 35%;
- l'amidon chaud selon la revendication 1 dans une quantité de 15% à 45% en poids sur le poids total de la composition; de préférence de 20% à 40%; plus préférablement de 25% à 35%;
- l'amidopectine selon la revendication 1 dans une quantité de 0,07% à 6% en poids sur le poids total de la composition; de préférence de 0,1% à 3%; plus préférablement de 0,15% à 2,5%;
- sucre dans une quantité de 5% à 35% en poids sur le poids total de la composition; de préférence de 10% à 30%;
- glucose déshydraté dans une quantité de 5 à 35% sur le poids total de la composition; de préférence de 10% à 30%;
- acide ascorbique dans une quantité de 0,5% à 8% en poids sur le poids total de la composition; de préférence de 1% à 5%;
- sorbate de potassium dans une quantité de 0,5% à 7% en poids sur le poids total de la composition; de préférence de 1% à 5%;
- acide citrique dans une quantité de 0,5% 12% en poids sur le poids total de la composition; de préférence de 1% à 10%;
où la quantité totale d'additifs et excipients est celle nécessaire à atteindre 100% de la composition.

6. Procédé pour éviter la libération d'eau d'aliments riches en eau avant, pendant ou après cuisson, comprenant le traitement préliminaire desdits aliments avec une quantité d'une composition selon une quelconque des revendications 1 à 5.

7. Utilisation d'une composition selon une quelconque des revendications 1 à 5 pour éviter la libération d'eau d'aliments riches en eau avant, pendant où après cuisson.

8. Utilisation selon la revendication 7 pour éviter la libération d'eau de produits de four, doux et/ou salés, contenant lesdits aliments.

9. Utilisation selon la revendication 8 dans la préparation et/ou la conservation desdits produits de four avant et/ou après leur cuisson.

10. Utilisation selon une quelconque des revendications 7-9, où si lesdits aliments riches en eau comprennent des fruits, ladite composition selon une des revendications 1 à 5 est diluée avec une quantité de sucre avant d'être ajoutée auxdits fruits.

11. Produits de four comprenant une quantité d'une des compositions selon une quelconque des revendications 1 à 5.
